Europäisches Patentamt

European Patent Office

Office européen des brevets

(11) Publication number: **0 129 992**
**B1**

(12) **EUROPEAN PATENT SPECIFICATION**

(45) Date of publication of patent specification: **04.11.87**

(21) Application number: **84303705.2**

(22) Date of filing: **01.06.84**

(51) Int. Cl.⁴: **F 16 L 13/08, F 16 L 19/04**

(54) Convertible flare/braze fitting.

(30) Priority: **23.06.83 US 507038**

(43) Date of publication of application:
**02.01.85 Bulletin 85/01**

(45) Publication of the grant of the patent:
**04.11.87 Bulletin 87/45**

(84) Designated Contracting States:
**FR IT**

(56) References cited:
**BE-A- 681 827**
**DE-C- 866 422**
**DE-U-7 133 638**
**US-A-2 824 756**
**US-A-3 264 012**

(73) Proprietor: **AEROQUIP AG**
**Bahnhofstrasse 17**
**Zug (CH)**

(72) Inventor: **Geer, Linda L.**
**Apt. J, 2910 Pheasant Run**
**Jackson Michigan 49202 (US)**
Inventor: **Knowles, Steven M.**
**4651, Northmoor Drive**
**Cement City Michigan 49233 (US)**

(74) Representative: **Williams, Trevor John et al**
**J.A. KEMP & CO. 14 South Square Gray's Inn**
**London WC1R 5EU (GB)**

Courier Press, Leamington Spa, England.

# Description

Fittings employed at the end of conduits take a variety of forms, such as adapters, tees, elbows, etc., and smooth wall conduits such as copper pipe, may be attached to the fittings by several systems, such as brazing or soldering, flares, upset or flanged ends, compression rings, or the like. Each type of interconnection between the conduit and fittings requires a particular fitting configuration, and with some modes of connection, the conduit end must be worked, such as flared or upset. Except for the brazed or soldered connections, a rotatable nut is usually mounted upon the conduit for attachment to fitting threads.

In view of the variety of connection systems available suppliers of equipment such as refrigeration units, air conditioners, and the like, must decide which type of fitting to employ without knowing the type of conduit connections preferred by their customers, or which will be used with the equipment being sold. Thus, it is often necessary for distributors, dealers, installers, etc. to maintain a large inventory of various types of fittings to accommodate the particular installation desired. While convertible or multi-purpose conduit fitting connections are known, such known fittings are too costly, or complicated, to enjoy commercial success, or do not lend themselves to diverse installation.

It is an object of the invention to provide a convertible fitting usable with conduit or tubing to selectively produce either a brazed, soldered or flared connection thereby substantially reducing inventory requirements.

Another object of the invention is to provide a fitting for conduit or tube wheerin either a brazed, soldered or flared connection may be used, and when utilizing a flared connection an inexpensive insert is employed, the insert construction being such that tightening of the flare nut simultaneously seals the conduit flare to the insert and seals the insert to the filling with a metal-to-metal seal.

A fitting in accordance with the prior art portion of claim 1 is disclosed in DE—C—866422. However this prior fitting is not adapted for use without the insert for the brazed or welded connection of conduit thereto. The present invention is characterised as specified in claim 1.

In the preferred practice of the invention the fitting includes an internal passage which is provided with a concentric counterbore intersecting an end surface. The cylindrical counterbore facilitates the insertion of the end of a cylindrical conduit or tube, such as copper tube, or the like, thereinto for connection to the fitting by conventional brazing or soldering techniques.

If a flare is formed upon the end of the conduit, an annular insert is located within the fitting counterbore and the insert includes a head having a conventional conical surface for cooperation with the conduit flare. The insert head is also provided with a homogeneous ridge in axial alignment with the fitting end, the ridge having a sharpened apex wherein tightening of a standard flare nut upon the fitting threads forces the conduit flare upon the insert conical surface, and simultaneously axially displaces the insert into the fitting counterbore to slightly embed the insert ridge into the fitting end producing a fluid tight metal-to-metal seal between the insert and fitting, as well as produce a fluid tight seal between the insert and flare.

The manufacture of fittings in accord with the invention requires no unusual machining techniques, may be economically achieved, and the insert is also a low cost high production part which may be economically discarded if a flare connection is not desired.

The aforementioned objects and advantages of the invention will be appreciated from the following description and accompanying drawings wherein:

Fig. 1 is an elevational view, partially sectioned, illustrating a fitting utilizing a brazed or soldered connection to a conduit,

Fig. 2 is an elevational view, partially sectioned, of a fitting in accord with the invention as connected to a flared conduit, illustrating the insert in the operative sealed relationship to the fitting,

Fig. 3 is a side elevational view of the insert, per se,

Fig. 4 is an elevational, sectional view taken through the insert along Section IV—IV of Fig. 3, and

Fig. 5 is an enlarged, sectional, detail view of the fitting counterbore and insert prior to the insert being embedded therein.

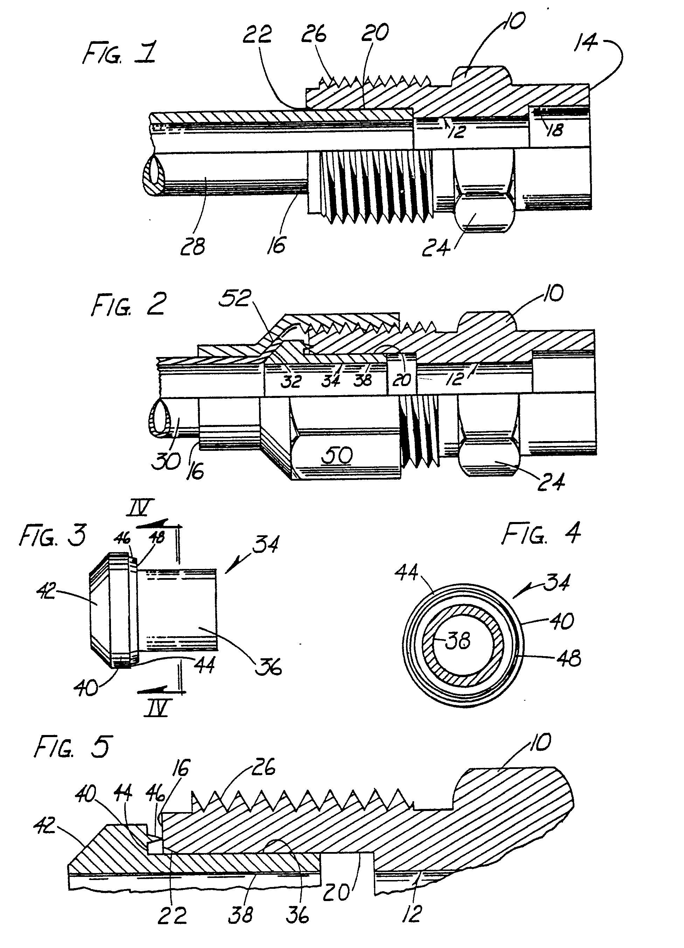

The configuration of the fitting is apparent from Figs. 1 and 2. The fitting includes a metal body 10, often formed of copper or brass, and includes an axial passage 12 intersecting the ends 14 and 16. The passage includes a concentric cylindrical counterbore 18 intersecting end 14 to which a conduit, not shown, may be brazed or soldered, as known, and the passage also includes the concentric cylindrical counterbore or recess 20 intersecting end 16. A beveled surface may be defined at 22 intesecting end 16 and counterbore 20 to aid in the insertion of a conduit into the counterbore, and to facilitate the brazing or soldering operation, if used. The fitting body 10 also includes the usual wrench engaging flats 24, and is externally threaded at 26.

If the fitting body is to be connected to a conduit 28 by brazing or soldering, the counterbore 20 and the end of the conduit are prepared in the usual manner by cleaning and fluxing, and the conduit is inserted into the counterbore and soldered or brazed therein in the known manner.

If it is desired to connect a flared conduit, such as shown at 30 in Fig. 2 having a conical flare 32 to the fitting body 10, the insert 34, Fig. 3, is used in conjunction with the fitting. The insert 34 is of a generally cylindrical configuration having an external cylindrical surface at 36, and is provided with a cylindrical bore 38. An enlarged diameter head 40 is defined upon the insert and the head includes a standard conical surface 42 of 45° for cooperation with a conventional conduit flare. Also, the head 40 includes a radial shoulder 44 lying in a plane perpendicular to the axis of the insert, and this shoulder includes an annular axially extending ridge or projection 46 having a sharp apex 48. The diameter of the insert 36 is slightly less than the diameter of the fitting counterbore 20 wherein the surfaces readily telescope as apparent in Figs. 2 and 5 for assembly of the insert into the counterbore in the illustrated manner.

After inserting the insert into the counterbore 20 the conduit flare 32 is brought into engagement with the insert surface 42, and the flare nut 50 rotatably mounted upon the conduit or tube 30 in the known manner is rotated to thread the nut upon the fitting threads 26. As the nut is threaded upon the fitting the conical nut surface 52 engages the flare 32 forcing the flare into firm engagement with the insert surface 42. As the nut 50 is further threaded upon the fitting the flare will force the ridge 46 against the fitting end 16, and final tightening of the nut will embed the ridge apex 48 slightly into the fitting end 16. Thus, a fluid tight metal-to-metal seal is achieved between the fitting body 10 and insert 34 by the ridge 46, and simultaneously a fluid tight metal-to-metal engagement will exist between the insert and the conduit flare 32.

The construction of the insert 34 permits the nut 50 to be unloosened and removed from the fitting and the reassembly of the conduit 30 upon the insert may occur a number of times without affecting the efficiency of the sealed relationship.

The fitting body 10 and the insert 34 may be formed of the same material or the material of the insert may be slightly harder than the fitting body material.

As the insert 34 is easily manufactured on automatic turning machines the cost of producing the insert is small, permitting the insert to be provided with each fitting body regardless of whether a brazed or soldered connection, or flared connection, is to be used. The fitting of the invention reduces inventories due to its multimode use.

**Claims**

1. A fitting comprising a fitting body (10) having a passage (12), a passage axis, an end (16) intersected by said passage and substantially perpendicular thereto, and a thread (26) defined upon the fitting body adjacent said end (16) and coaxial with said passage, and a tubular insert (34) having a portion with an external cylindrical surface (36) which is of a diameter slightly less than the diameter of a cylindrical portion (20) of the passage and is receivable within said passage portion, whereby said insert cylindrical portion is axially displaceable within said passage portion, an enlarged head (40) on the insert having an external diameter greater than the diameter of said insert cylindrical surface (36), a conical sealing surface (42) defined upon said head, converging toward said passage axis in a direction away from said fitting body end (16) and adapted to be engaged by a conduit flare, the head being adapted to seal against the fitting body (10), characterised in that the cylindrical passage portion (20) intersects the end (16) of the body, the head has an annular radial shoulder (44) in opposed relation to said body end (16) and a seal (46) located between said shoulder and said body end comprises an annular ridge homogeneously defined upon said shoulder (44) concentric with said insert cylindrical surface and having a sharp apex (48) to facilitate embedding into said fitting body end (16).

2. A fitting as claimed in claim 1, characterised in that said insert (34) and ridge (46) are of a material harder than the material of said fitting body (10).

3. A fitting as claimed in claim 1 or 2, characterised in that a cylindrical counterbore (20) is defined in said fitting body (10) to comprise said passage portion (20).

**Patentansprüche**

1. Fitting mit einem Fittingkörper (10), der einen Durchlass (12), eine Durchlassachse, ein den Durchlass schneidendes Ende (16), das zur Durchlassachse im wesentlichen senkrecht ausgerichtet ist, und ein Gewinde (26) aufweist, das auf dem Fittingkörper (10) nahe dem Ende (16) vorgesehen und zum Durchlass koaxial ausgerichtet ist, und mit einem rohrförmigen Einsatz (34), welcher einen Abschnitt mit einer zylindrischen Aussenfläche (36) aufweist, die einen Durchmesser besitzt, der etwas kleiner ist als der Durchmesser eines zylindrischen Abschnittes (20) des Durchlasses, und welcher in dem Durchlassabschnitt (20) aufnehmbar ist, so dass der zylindrische Einsatzabschnitt in dem Durchlassabschnitt axial verschiebbar ist, wobei der rohrförmige Einsatz einen vergrösserten Kopf (40) mit einem Aussendurchmesser aufweist, der grösser ist als der Durchmesser der zylindrishen Einsatzfläche (36), und auf dem Kopf (40) eine konische Dichtungsfläche (42) festgelegt ist, welche in einer Richtung weg vom Ende (16) des Fittingkörpers (10) zur Durchlassachse hin konvergiert, und welche dazu vorgesehen ist, in eine Leitungserweiterung einzugreifen, und der Kopf (40) zum Abdichten gegen den Fittingkörper (10) vorgesehen ist, dadurch gekennzeichnet, dass der zylindrische Durchlassabschnitt (20) das Ende (16) des Körpers (10) schneidet, dass der Kopf (40) eine ringförmige radiale Schulter (44) aufweist, die dem Ende (16) des Körpers (10) gegenüberliegt, und dass zwischen der Schulter (44) und dem Ende (16) des Körpers (10) eine Dichtung (46) vorgesehen ist, die einen ringförmigen Kamm aufweist, der einstückig mit der Schulter (44) konzentrisch zur zylindrischen Einsatzfläche ausgebildet ist und zur Erleichterung der Einlagerung in das Ende (16) des Fittingkörpers (10) eine scharfe Schneide (48) aufweist.

2. Fitting nach Anspruch 1, dadurch gekennzeichnet, dass der Einsatz (34) und der Kamm (46) aus einem Material sind, das härter ist als das Material des Fittingkörpers (10).

3. Fitting nach Anspruch 1 oder 2, dadurch gekennzeichnet, dass im Fittingkörper (10) eine Einsenkbohrung (20) festgelegt ist, die den Durchlassabschnitt (20) aufweist.

**Revendications**

1. Raccord comprenant un corps de raccord (10) présentant un passage (12), un axe de passage, une extrémité (16) intersectée par ledit passage et sensiblement perpendiculaire à ce dernier, et un filetage (26) défini sur le corps de raccord dans une position adjacente à ladite extrémité (16) et coaxial audit passage, et un insert tubulaire (34) présentant une partie dont la surface cylindrique externe (36) a un diamètre légèrement inférieur au diamètre d'une partie cylindrique (20) du passage et peut être reçue à l'intérieur de ladite partie de passage, ladite partie cylindrique de l'insert pouvant être de ce fait déplacée axialement à l'intérieur de ladite partie de passage, une tête élargie (40) sur l'insert, dont le diamètre externe est plus important que le diamètre de ladite surface cylindrique (36) de l'insert, une surface d'étanchéité conique (42) définie sur ladite tête, convergeant vers ledit axe du passage dans une direction s'éloignant de ladite extrémité (16) du corps de raccord et apte à venir coopérer avec une partie évasée d'une conduite, la tête étant apte à venir s'appliquer de façon étanche contre le corps de raccord (10), caractérisé en ce que la partie (20) du passage cylindrique intersecte l'extrémité (16) du corps, la tête présente un épaulement radial annulaire (44) à l'opposé de ladite extrémité (16) du corps et un joint (46) situé entre ledit épaulement et ladite extrémité du corps comprend une arête annulaire définie de façon homogène sur ledit épaulement (44) concentriquement à la surface cylindrique dudit insert et présentant un sommet aigu (48) pour faciliter son incorporation dans ladite extrémité (16) du corps de raccord.

2. Raccord selon la revendication 1, caractérisé en ce que ledit insert (34) et ladite arête (46) sont réalisés en un matériau qui est plus dur que le matériau dudit corps de raccord (10).

3. Raccord selon la revendication 1 ou 2, caractérisé en ce qu'un contre-alésage cylindrique (20) est défini dans ledit corps de raccord (10) de manière à comprendre ladite partie de passage (20).

0 129 992

FIG. 1

FIG. 2

FIG. 3

FIG. 4

FIG. 5

1